# EUROPÄISCHE PATENTSCHRIFT

(11) **EP 0 403 765 B1**
(45) Veröffentlichungstag und Bekanntmachung des Hinweises auf die Patenterteilung: **09.06.1993**
(21) Anmeldenummer: 90107916.0
(22) Anmeldetag: 26.04.1990
(51) Int. Cl.: B62D 25/08, B60R 16/02

(54) **Anordnung zur Halterung und Verlegung von einer Vielzahl gemeinsam geführter Kabel in einem Einbauraum eines Kraftfahrzeuges**
Arrangement and mounting for a cable harness in a frame structure of an automobile
Disposition et montage d'un faisceau de câbles dans un espace de construction d'un véhicule à moteur

(30) Priorität: 22.06.1989 DE 3920523
(43) Veröffentlichungstag der Anmeldung: 27.12.1990
(73) Patentinhaber: DAIMLER-BENZ AKTIENGESELLSCHAFT, 70327 Stuttgart (DE)
(72) Erfinder: Joas, Rolf, D-7000 Stuttgart 60 (DE); Guth, Bertholf, D-7000 Stuttgart 50 (DE); Tokai, Stefan, D-7032 Sindelfingen 6 (DE)

(56) Entgegenhaltungen:
- EP-A- 0 091 618
- EP-A- 0 099 115
- DE-A- 3 402 744
- DE-A- 3 535 382
- PATENT ABSTRACTS OF JAPAN, Band 8, Nr. 80 (M-289)[1517], 2. April 1984; & JP-A-58 224 832 (NISSAN JIDOSHA K.K.) 27-12-1983

## Beschreibung

Die Erfindung betrifft eine Anordnung zur Halterung und Verlegung von einer Vielzahl gemeinsam geführter Kabel in einem Einbauraum eines Kraftfahrzeuges gemäß dem Oberbegriff des Patentanspruches 1.

Es ist bereits eine gattungsgemäße Anordnung bekannt (DE 34 02 744 Cl), wonach die Kabel gemeinsam in einem Kabelkanal oberhalb eines Montageraumes geführt werden. Dieser Kabelkanal ist in seiner Lage fest fixiert und somit nicht zu entfernen, um an den darunter liegenden Montageraum zu gelangen.

Außerdem ist es in Kraftfahrzeugen grundsätzlich bekannt, die Kabel zu einem Kabelbaum zusammenzufassen. Dieser Kabelbaum wird dann mit Kabelbändern an geeigneten Stellen angebracht. Es ergibt sich die Notwendigkeit, den Kabelbaum zu entfernen, um Montagearbeiten an einem unter diesem Kabelbaum befindlichen Montageraum durchführen zu können. Dazu müssen die Kabelbänder des Kabelbaumes gelöst werden, damit der Kabelbaum komplett über dem Montageraum entfernt werden kann. Besteht dieser Kabelbaum aus mehreren Kabeln, hat er eine solche Biegefestigkeit, daß er nur schwer in sich selbst drehbar ist, d.h. daß der Kabelbaum mit großem Kraftaufwand weggezogen werden muß.

Bei dieser Anordnung ergeben sich Nachteile dahin gehend, daß der große notwendige Kraftaufwand zum Entfernen des Kabelbaumes zu einem Abreißen einzelner Kabel führen kann. Außerdem wird der Kabelbaum auf einem möglichst direkten Weg verlegt, wodurch bei einer Verdrehung des Kabelbaumes kein Platz zum Zugang eines unter dem Kabelbaumes liegenden Montageraumes gewonnen werden kann.

Aufgabe der Erfindung ist es, eine Anordnung zur Halterung und Verlegung von einer Vielzahl gemeinsam geführter Kabel in einem Einbauraum eines Kraftfahrzeuges so auszubilden, daß ein leichter Zugang zu einem unterhalb der Kabel liegenden Montageraum möglich ist, indem die Kabel aus ihrer Normallage bewegt werden, ohne daß die Kabel mit großem Kraftaufwand gezogen werden müssen.

Diese Aufgabe wird bei einer gattungsgemäßen Anordnung zur Halterung und Verlegung von einer Vielzahl gemeinsam geführter Kabel in einem Einbauraum eines Kraftfahrzeuges erfindungsgemäß mit den kennzeichnenden Merkmalen des Anspruchs 1 gelöst, wobei die Merkmale der Unteransprüche vorteilhafte Aus- und Weiterbildungen kennzeichnen.

Weitere Vorteile der Erfindung gegenüber dem bekannten Stand der Technik ergeben sich, wenn die Kabel in einem Kabelkanal geführt werden. In diesem Fall müssen zum Entfernen des Kabelbaumes nicht zunächst mehrere Kabelbänder gelöst werden. Die Kabel werden dann entfernt, indem der Kabelkanal aus seiner Verriegelung gelöst und weggedreht wird.

Bei der erfindungsgemäßen Anordnung müssen die Kabel auf einer gekrümmten Linie geführt werden. Die Kabel werden an den beiden Endpunkten der gekrümmten Linie schwenkbeweglich gelagert. Diese schwenkbewegliche Lagerung kann beispielsweise realisiert sein, indem die Kabel an den beiden Endpunkten der gekrümmten Linie eine Sollknickstelle aufweisen. In diesem Fall können die Kabel an den Endpunkten der gekrümmten Linie genauso befestigt wie im Verlauf der gekrümmten Linie.

Die Kabel können als ein Kabelbaum geführt sein, d.h. daß die Kabel ineinander verdreht sind. Dadurch hat ein Kabelbaum eine sehr große Biegefestigkeit. Deshalb wird bei der erfindungsgemäßen Anordnung in vorteilhafter Weise die Verdrehung der Kabel ineinander in einer Umgebung der beiden Endpunkte der gekrümmten Linie aufgelöst, um so die Biegefestigkeit des Kabelbaumes an diesen Endpunkten herabzusetzen. Somit ist es dann unter einem besonders geringen Kraftaufwand möglich, den Kabelbaum um diese beiden Endpunkte zu drehen, wobei der Kabelbaum an diesen beiden Endpunkten eine Sollknickstelle hat und ansonsten im wesentlichen seine Form beibehält.

In besonders vorteilhafter Weise werden die Kabel in einem Kabelkanal geführt. Auch dann sind die Kabel u.U. zu einem Kabelbaum verdreht, wobei diese Verdrehung in einer Umgebung der Endpunkte gelöst sein sollte, wie bereits oben beschrieben. Dieser Kabelkanal muß ebenfalls eine Sollknickstelle an den Endpunkten der gekrümmten Linie aufweisen. Diese Sollknickstelle des Kabelkanals kann realisiert sein, indem der Kabelkanal an den Endpunkten der gekrümmten Linie in seinem Verlauf unterbrochen und mittels Scharnieren verbunden ist. Diese Scharniere können dabei so ausgebildet sein, daß sie bei einer Auslenkung der Kabel aus ihrer Normallage eine zurückstellende Kraft der Kabel in ihre Normallage aufbauen. Alternativ dazu kann der Kabelkanal aus einem Material gefertigt sein, das eine Biegung um die Endpunkte der gekrümmten Linie zuläßt. In diesem Fall stellt sich eine zurückstellende Kraft der Kabel in ihre Normallage aufgrund der Torsion des Materials des Kabelkanals ein, wenn eine Auslenkung der Kabel aus ihrer Normallage erfolgt.

Dieser Kabelkanal kann außerdem noch durch einen Deckel abgeschlossen werden, der in an sich bekannter Weise auf dem Kabelkanal befestigt wird. Dieser Abschluß des Kabelkanals kann auch gegeben sein, indem eine Abschlußvorrichtung, die den Motorraum abschließt, so auf dem Kabelkanal aufliegt, daß diese Abschlußvorrichtung gleichzeitig den Kabelkanal abschließt.

Die Kabel müssen in ihrer Normallage entlang der gekrümmten Linie befestigt sein. Sind die Kabel zu einem Kabelbaum verdreht, so kann dieser Kabelbaum in an sich bekannter Weise befestigt werden, beispielsweise durch Kabelbänder. Bei Verwendung eines Kabelkanals kann dieser Kabelkanal befestigt werden, beispielsweise durch selbstrastende Federklemmen oder Selbstklebestreifen. Dient die Abschlußvorrichtung des Motorraumes gleichzeitig als Abschluß des Kabelkanals, kann durch die Abschlußvorrichtung des Motorraumes der Kabelkanal so gegen eine Einrichtung des Motorraumes gedrückt werden, daß eine Fixierung des Kabelkanals in der Normallage gegeben ist.

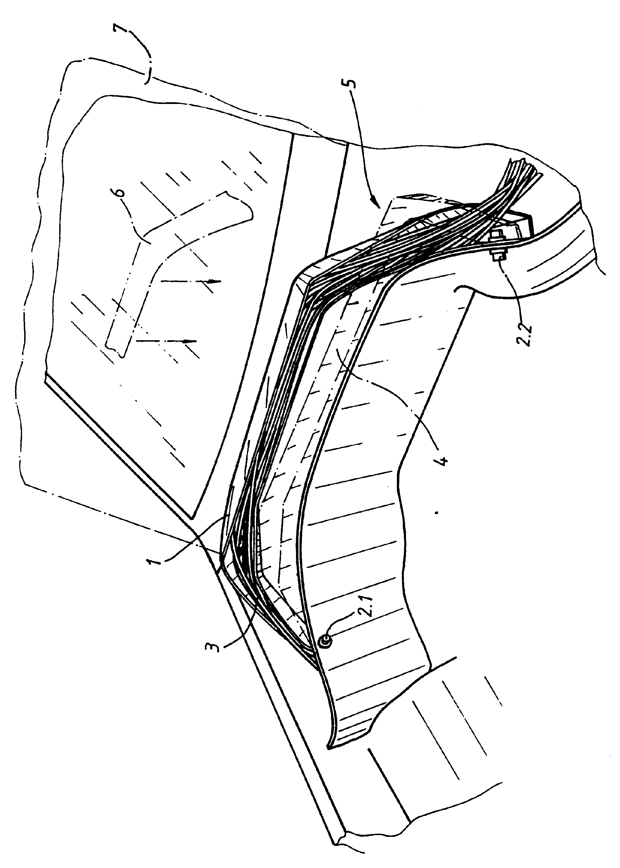

Ein Ausführungsbeispiel der Erfindung ist in der Zeichnung schematisch dargestellt und wird im folgenden näher beschrieben.

Aus der Figur ist zu entnehmen, daß die Kabel 3 in einem Kabelkanal 1 geführt werden können. Dieser Kabelkanal 1 ist in den beiden Endpunkten 2.1 und 2.2 drehbar gelagert. Eine rückstellende Kraft ergibt sich durch die Torsion des Materials des Kabelkanals 1, wenn der Kabelkanal aus seiner Normallage 4 ausgelenkt wird. Alternativ kann der Kabelkanal 1 auch aus einem Material gefertigt sein, das keine Torsion zuläßt. In diesem Fall müssen an den beiden Endpunkten 2.1 und 2.2 der gekrümmten Linie Scharniere angebracht sein, die die Drehbewegung des Kabelkanals 1 ermöglichen. Vorteilhafterweise bewirken diese Scharniere beispielsweise durch einen Federmechanismus eine rückstellende Kraft, wenn der Kabelkanal 1 aus seiner Normallage 4 ausgelenkt wird. Ebenso kann der Kabelkanal 1 mit einem Deckel 6 abgeschlossen werden. Dieser Deckel 6 wird in an sich bekannter Weise auf dem Kabelkanal befestigt wie z.B. durch Aufklemmen. Alternativ kann der Kabelkanal 1 auch abgeschlossen werden, indem die Abschlußvorrichtung 7 des Einbauraumes in geschlossenem Zustand gleichzeitig als Abschluß des Kabelkanals 1 dient. In diesem Fall kann die Abschlußvorrichtung 7 des Einbauraumes gleichzeitig verwendet werden, um den Kabelkanal 1 gegen eine fest eingebaute Einrichtung in dem Einbauraum zu drücken und somit den Kabelkanal 1 in seiner Normallage 4 zu halten. In der Figur ist der Einbauraum als Motorraum dargestellt.

Nachfolgend wird ein Ausführungsbeispiel zur Halterung gemeinsam geführter Kabel 3 gegeben. Es wird der Fall beschrieben, daß die Kabel 3 in einem Kabelkanal 1 geführt werden, der von der Abschlußvorrichtung 7 des Motorraumes in seiner Normallage 4 gehalten wird. Nach dem Öffnen der Abschlußvorrichtung 7 kann der Kabelkanal 1 geschwenkt werden. Davor werden ggf. Klemmvorrichtungen gelöst, die den Kabelkanal 1 zusätzlich in seiner Normallage 4 fixieren. Nach dem Wegschwenken des Kabelkanals 1 können Montagearbeiten in dem Montageraum 5 durchgeführt werden. Anschließend wird der Kabelkanal 1 wieder in seine Normallage 4 zurückgeführt und dort ggf. mit den Klemmvorrichtungen fixiert. Anschließend wird die Abschlußvorrichtung 7 des Motorraumes geschlossen, wodurch der Kabelkanal 1 zusätzlich in seiner Lage fixiert und in sich abgeschlossen wird.

## Patentansprüche

1. Anordnung zur Halterung und Verlegung von einer Vielzahl gemeinsam geführter Kabel (3) in einem Einbauraum eines Kraftfahrzeuges, wobei die Aggregate verbindenden Kabel (3) entlang einer vorgegebenen, mindestens eine Krümmung aufweisenden Linie, einen Montageraum (5) zumindest teilweise verdeckend verlegt und entlang dieser Linie lösbar fixiert sind,
**dadurch gekennzeichnet,**
daß die Kabel (3) in den Endpunkten der Linie (2.1 und 2.2) schwenkbeweglich, den darunter liegenden Montageraum freigebend gelagert sind.

2. Anordnung nach Anspruch 1,
**dadurch gekennzeichnet,**
daß die Kabel (3) in einem Kabelkanal (1) geführt werden, wobei die Kabel (3) mit dem gesamten Kabelkanal (1) schwenkbeweglich gestaltet sind.

3. Anordnung nach Anspruch 2,
**dadurch gekennzeichnet,**
daß der Kabelkanal (1) durch einen Deckel (6) abschließbar ist.

4. Anordnung nach Anspruch 2 oder 3,
**dadurch gekennzeichnet,**
daß der Kabelkanal (1) von einer den Einbauraum, in dem die Kabel (3) verlaufen, abschließenden Vorrichtung (7) gegen eine fest montierte Einrichtung gepreßt wird, so daß der Kabelkanal (1) in seiner Normallage (4) fixiert ist, wenn die Vorrichtung (7) den Einbauraum abschließt.

5. Anordnung nach einem der Ansprüche 1 bis 4,
**dadurch gekennzeichnet,**
daß die Kabel (3) zu einem Kabelbaum zusammengebunden sind, wobei dieser Kabelbaum in den Endpunkten (2.1 und 2.2) der Linie eine solche Biegefestigkeit aufweist, daß eine Schwenkbewegung des Kabelbaumes möglich ist.

6. Anordnung nach einem der Ansprüche 1 bis 5,
**dadurch gekennzeichnet,**
daß die Fixierung der Kabel (3) erfolgt, indem die Kabel (3) mit Kabelbändern festgebunden werden.

7. Anordnung nach einem der Ansprüche 1 bis 6,
**dadurch gekennzeichnet,**
daß die Fixierung der Kabel (3) erfolgt, indem sich bei einer Auslenkung der Kabel (3) aus der Normallage (4) durch eine Drehung um die beiden Endpunkte (2.1 und 2.2) eine rückwirkende Kraft einstellt, die die Kabel (3) in die Normallage (4) zurück bewegt.

8. Anordnung nach Anspruch 7,
**dadurch gekennzeichnet,**
daß sich die rückwirkende Kraft zumindest teilweise aus einer Torsion einer Umhüllung der Kabel ergibt.

9. Anordnung nach Anspruch 7 oder 8,
**dadurch gekennzeichnet,**
daß sich die rückwirkende Kraft zumindest teilweise ergibt, indem bei der schwenkbeweglichen Anbringung der Kabel in den Endpunkten (2.1 und 2.2) der Linie ein Mechanismus, insbesondere ein Federmechanismus, installiert wird, der zu einer Kraft führt, die die Kabel in die Normallage (4) zurück bewegt.

## Claims

1. Arrangement for holding and laying a multiplicity of jointly guided cables (3) in an installation space of a motor vehicle, the cables (3) connecting units being laid along a predetermined line having at least one curvature, and so as to cover a mounting space (5) at least partially and being fixed releasably along this line, characterized in that the cables (3) are mounted at the end points of the line (2.1 and 2.2) so as to be swivellably movable, freeing the mounting space lying below them.

2. Arrangement according to Claim 1, characterized in that the cables (3) are guided in a cable duct (1), the cables (3) being designed to be swivellably movable with the entire cable duct (1).

3. Arrangement according to Claim 2, characterized in that the cable duct (1) can be closed by a cover (6).

4. Arrangement according to Claim 2 or 3, characterized in that the cable duct (1) is pressed against a firmly mounted installation by a device (7) closing the installation space in which the cables (3) run, with the result that the cable duct (1) is fixed in its normal position (4) when the device (7) closes the installation space.

5. Arrangement according to one of Claims 1 to 4, characterized in that the cables (3) are bound together to form a cable harness, this cable harness having such a flexural strength at the end points (2.1 and 2.2) of the line that a swivelling movement of the cable harness is possible.

6. Arrangement according to one of Claims 1 to 5, characterized in that the fixing of the cables (3) is effected by the cables (3) being fastened with cable tapes.

7. Arrangement according to one of Claims 1 to 6, characterized in that the fixing of the cables (3) is effected by a reactive force arising in the event of a deflection of the cables (3) out of the normal position (4) due to rotation about the two end points (2.1 and 2.2), said reactive force moving the cables (3) back into the normal position (4).

8. Arrangement according to Claim 7, characterized in that the reactive force is produced at least partially from a torsion of a sheathing of the cables.

9. Arrangement according to Claim 7 or 8, characterized in that the reactive force is produced at least partially by the installation of a mechanism, in particular a spring mechanism, during the swivellably movable fitting of the cables at the end points (2.1 and 2.2) of the line, said mechanism leading to a force which moves the cables back into the normal position (4).

## Revendications

1. Dispositif pour tenir et poser plusieurs câbles (3) couvrant le même trajet dans un logement d'un véhicule automobile, dans lequel les câbles (3) qui relient les organes sont posés le long d'une ligne prédéterminée présentant au moins une courbure, et en recouvrant au moins partiellement un espace de montage (5), et sont fixés de façon démontable le long de cette ligne,
caractérisé
en ce qu'aux points terminaux de la ligne (2.1 et 2.2), les câbles(3)sont montés pivotants pour pouvoir ainsi dégager l'espace de montage sous-jacent.

2. Dispositif selon la revendication 1,
caractérisé
en ce que les câbles (3) s'étendent dans une goulotte de câbles (1), les câbles (3) étant agencés de façon à pouvoir pivoter avec l'ensemble de la goulotte de câbles (1).

3. Dispositif selon la revendication 2,
caractérisé
en ce que la goulotte de câbles (1) peut être fermée par un couvercle (6).

4. Dispositif selon la revendication 2 ou 3,
caractérisé
en ce que la goulotte de câbles (1) est pressée par un dispositif (7) qui ferme le logement dans lequel les câbles (3) passent contre un dispositif monté fixe, de sorte que la goulotte de câbles (1) est fixée dans sa position normale (4) lorsque le dispositif (7) ferme le logement.

5. Dispositif selon une des revendications 1 à 4,
caractérisé
en ce que les câbles (3) sont groupés en un faisceau de câbles, ce faisceau de câbles présentant aux points terminaux (2.1 et 2.2) de la ligne une flexibilité suffisante pour que le faisceau de câbles puisse exécuter un mouvement de pivotement.

6. Dispositif selon une des revendications 1 à 5,
caractérisé
en ce que la fixation des câbles (3) s'effectue en fixant les câbles (3) à l'aide de colliers de câbles.

7. Dispositif selon une des revendications 1 à 6,
caractérisé
en ce que la fixation des câbles (3) est assurée par le fait que, lorsqu'on écarte les câbles (3) de la position normale (4), la rotation autour des deux points terminaux (2.1 et 2.2) engendre une force de rappel qui ramène les câbles (3) à la position normale (4).

8. Dispositif selon la revendication 7,
caractérisé
en ce que la force de rappel est développée, du moins en partie, par une torsion de l'enveloppe des câbles.

9. Dispositif selon la revendicatoin 7 ou 8,
caractérisé
en ce que la force de rappel est développée, du moins en partie, par le fait que, pour le montage pivotant des câbles aux points terminaux (2.1 et 2.2) de la ligne, on installe un mécanisme, en particulier un mécanisme à ressort, qui donne naissance à une force qui ramène les câbles à la position normale (4).
